# EUROPEAN PATENT SPECIFICATION

(11) **EP 2 797 736 B1**
(45) Date of publication and mention of the grant of the patent: **29.06.2016**
(21) Application number: 12820927.7
(22) Date of filing: 18.12.2012
(51) Int. Cl.: B29D 30/06

(54) **METHOD AND DEVICE FOR CONTROLLING THE MOULDING OF A TYRE IN A TYRE BUILDING PLANT.**
VERFAHREN UND VORRICHTUNG ZUR KONTROLLE DES FORMENS EINES REIFENS IN EINER REIFENBAUANLAGE
PROCÉDÉ ET DISPOSITIF POUR COMMANDER LE MOULAGE DE PNEUMATIQUE DANS UNE USINE DE FABRICATION DE PNEUMATIQUE

(30) Priority: 27.12.2011 IT MI20112397; 30.12.2011 US 201161582034 P
(43) Date of publication of application: 05.11.2014
(73) Proprietor: Pirelli Tyre S.p.A., 20126 Milano (IT)
(72) Inventor: BERENGUER, Albert, I-20126 Milan (IT); MANCINI, Gianni, I-20126 Milan (IT)
(74) Representative: Lasca, Sergio
(86) International application number: PCT/IB2012/057414
(87) International publication number: WO 2013/098713

(56) References cited:
- GB-A- 938 797
- JP-A- 7 232 331
- US-A- 1 762 830
- US-A- 2 695 424
- US-A- 2 970 344
- US-A- 3 989 429
- US-A- 4 082 490
- US-A1- 2009 159 215

## Description

The present invention relates to a method, a process and a device for controlling the moulding of a tyre in a tyre building plant.

A tyre for vehicle wheels generally comprises a carcass structure comprising at least one carcass ply having respectively opposite end edges engaged with respective annular anchoring structures, integrated in the zones usually identified by the name of "beads", having an inner diameter substantially corresponding to a so-called "fitting diameter" of the tyre on a respective rim.

A belt structure is associated with the carcass structure. The belt structure comprises one or more belt layers arranged radially one on top of the other and on top of the carcass structure and having textile or metal reinforcement cords with crossed orientation and/or substantially parallel to the direction of circumferential extension of the tyre. A tread band is applied in a radially outer position with respect to the belt structure. The tread band is also made of elastomeric material as well other semifinished parts making up the tyre.

Moreover, respective sidewalls of elastomeric material are applied in an axially outer position on the side surfaces of the carcass structure, each extending from one of the side edges of the tread band up to the respective annular anchoring structure to the beads. In tubeless tyres, an airtight coating layer, usually called "liner", covers the inner surfaces of the tyre.

After the building of the green tyre, carried out by assembling/building the respective components, a moulding and vulcanization treatment is carried out aimed to determine the structural stabilization of the tyre through crosslinking of the elastomeric compositions and, if required, to impress thereon a desired tread pattern and any graphical signs at the sidewalls.

For this purpose, according to a type of moulding and vulcanization method of a green tyre called "with imposed pressure", the green tyre is introduced into a mould and pressed against the inner walls of said mould by means of an expansible chamber (also called vulcanization chamber).

Said expansible chamber is arranged within the same tyre and has, in a radially inner position thereof, at least one circumferential edge carrying appendices for the anchoring to respective parts of the mould.

The expansion of said chamber is obtained by introducing a warm fluid (gas or water vapour) under pressure therein, so as to bring said chamber in contact with the inner surface of the tyre and compress the latter against the walls of the moulding cavity, with concurrent transmission of the heat required for crosslinking.

At the end of the vulcanization, the mould is opened to allow the removal of the tyre and prepare the mould for a new vulcanization cycle.

"Lowered tyre" is used to indicate a tyre having a reduced section ratio, i.e. wherein the section height measured between the radially outermost point of the tread band and the radially innermost point of the bead is lower than about 50% of the section width, measured axially in the point of maximum chord of the tyre.

DE 102008010112 describes a device for the vulcanization of tyres comprising a vulcanization chamber wherein partial areas of the chamber consist of a material characterised by an anisotropic behaviour in the chamber expansion step. Said areas are made by means of suitable "strength carriers" integrated in the material constituting the same chamber.

JP 7232331 A relates to a tyre vulcanizing bladder wherein a plurality of continuous grooves in the same direction, in an axial direction or in a peripheral direction or in a slanting direction, are formed on an inner face of the bladder main body.

US2970 344 A discloses a curing bag, or tube, having a circumferentially extending transversely flexible crown conforming to the inner surface of a tire casing adjacent its tread portion. The crown wall can have alternate circumferentially continuous annular rib and groove portions on opposite sides of the centre of its peripheral wall surface, the reduced thickness of said crown wall groove portions serving to increase the transverse flexibility of the bag crown wall.

US 2 695 524 A illustrates a walled curing bag comprising an annular toroidal form of extensible material, having an exterior contour corresponding to that of the interior of a tyre casing, the wall thickness of the bag being different at the different portion of the bag thereof. The interior surface of the bag has integral reinforcing ribs, projecting therefrom.

GB 938 797 A relates to a tire curing bags with internal ribs. The document discloses a flexible molding member for use in the manufacture of vehicle tires, provided over that face which will not, in use, in contact with the tire, with a series of spaced ribs, studs or other projection.

The Applicant has sometimes found defects on the radially inner surface of the moulded and vulcanized tyre, due to the presence of residual air in the contact zone between expansible chamber and radially inner surface of the tyre.

Such drawback may occur in relation to both the geometrical shape of the expansible chamber and to anomalies in the sequence of approach and adhesion of the chamber to the tyre during the expansion step of the same chamber, which may cause an irregular outflow of the air from the relative contact zone.

In particular, the Applicant has found that subsequent to usual condensation phenomena of the fluid used for the expansion of the vulcanization chamber - due to the contact between warm fluid and inner surface of the chamber characterised by a greatly lower temperature - the condensed fluid collects by gravity into the axially outer lower zone of the same chamber.

The Applicant has further found that such asymmetric distribution of the condensed fluid within the chamber corresponds to an asymmetric distribution of the masses on the structure of the same chamber, which may lead to the realization of a non optimal approach sequence between chamber and inner surface of the tyre.

In particular, the Applicant has observed that, in such circumstances, the outer surface of the chamber expands asymmetrically. As a consequence of the weight of said condensed fluid present in the axially outer lower zone of the tyre, the initial contact between the radially outer surface of the chamber and the radially inner surface of the tyre takes place at an axially outer surface portion with respect to the equatorial plane.

Such circumstance, as the expansion proceeds, makes the above chamber contact the bead arranged in the lower zone of the mould, causing a possible barrier to the outflow of the air present into the volume delimited by the outer surface of said chamber and the inner surface of the tyre.

The phenomenon described above is especially relevant in lowered tyres, which have small curvature radiuses in the zone between sidewall and tread.

The Applicant has therefore perceived the need to provide a control of the chamber movement during the expansion step of the same and accordingly, a control of the tyre moulding.

The Applicant has further noted that the solutions of the type described, for example, in DE 102008010112 are complex to be made as they require the simultaneous use of different materials cooperating with each other; the production processes for building such expansible chambers, moreover, are quite burdensome.

The Applicant has understood that it would have been possible to reach a solution of expansible chamber comprising differentiated portions based on the relevant elastic modulus value, through a mechanical interruption of the structural continuity of the surfaces of the same chamber.

The Applicant has therefore found that by suitably making a plurality of grooves at least on the inner surface of the expansible chamber it is possible to obtain a specific approach and adhesion sequence of the chamber to the inner surface of the tyre. Such specific sequence allows the risk of generating defects on the radially inner surface of the tyre to be reduced and a tyre moulding to be obtained according to the design parameters.

According to a first aspect thereof, the present invention therefore relates to a method for controlling the moulding of a tyre according to claim 1.

In this way, the elastic modulus of said at least one portion decreases with respect to the elastic modulus of the remaining portions of said chamber. A differentiated deformation of the different portions of said chamber is therefore allowed in relation to the specific elastic modulus value, during the expansion of said expansible chamber towards the radially inner surface of the tyre subjected to moulding and vulcanization.

The Applicant believes that, according to such method for controlling the moulding of a tyre, the expansion of said chamber occurs in a substantially symmetric manner, allowing the risk of generating defects on the inner surface of the tyre to be reduced.

According to a second aspect thereof, the invention relates to an expansible chamber for tyre vulcanization and moulding apparatuses, according to claim 7.

The present invention, in at least one of the above aspects thereof, can comprise at least one of the following preferred features, taken individually or in combination with the others.

Preferably, said at least one first plurality of grooves is made, in a radially inner position to said chamber, on at least one pair of symmetrical portions with respect to the equatorial plane of said expansible chamber.

Preferably, said at least one first plurality of grooves is made according to trajectories which are substantially parallel to one another.

In a preferred embodiment, it is provided that at least one further plurality of grooves on a radially outer surface of said expansion chamber are made, said grooves being substantially parallel to one another.

Preferably, said at least one first and one further plurality of grooves are reciprocally arranged in a substantially parallel way.

Preferably, grooves Y of said at least one first plurality have a width lₛᵢ ≤ 1.5 mm.

Preferably, grooves Y of said at least one first plurality have a width lₛᵢ ≥ 0.8 mm.

Preferably, grooves Y of said at least one first plurality have a depth pₛᵢ ≤ 0.75 mm.

Preferably, grooves Y of said at least one first plurality have a depth pₛᵢ ≥ 0.05 mm.

Preferably, grooves W of said further plurality have a width lₛₑ ≤ 1.5 mm.

Preferably, grooves W of said further plurality have a width lₛₑ ≥ 0.8 mm.

Preferably, grooves W of said further plurality have a depth pₛₑ ≤ 0.75 mm.

Preferably, grooves W of said further plurality have a depth pₛₑ ≥ 0.05 mm.

Preferably, the elastic modulus value of said at least one pair of symmetrical portions is reduced by at least about 20% with respect to the elastic modulus value of the remaining portions of the expansible chamber.

Preferably, the elastic modulus value of said at least one pair of symmetrical portions is reduced by no more than about 40% with respect to the elastic modulus value of the remaining portions of the expansible chamber.

In a preferred embodiment, during the expansion of said chamber the fluids interposed between the radially outer surface of the expansion chamber and the radially inner surface of the tyre are channelled into said further plurality of grooves and discharged.

In a further preferred embodiment, said expansion chamber comprises X pairs of symmetrical portions, with respect to the equatorial plane of said chamber, having elastic modulus Eₓ, with 1 ≤ X ≤ n, reduced with respect to said modulus E₀ of the remaining chamber portions, by making X pluralities of grooves substantially parallel to one another, in a radially inner position to said chamber, arranged on said X pairs of symmetrical portions.

In a preferred embodiment, each groove W arranged on the radially outer surface of the chamber is arranged, with respect to the consecutive groove, at a distance L ≤ 22 mm. Preferably, each groove W arranged on the radially outer surface of the chamber is arranged, with respect to the consecutive groove, at a distance L ≥ 13 mm.

In a preferred embodiment, each pair of consecutive grooves W arranged on the radially outer surface of the chamber corresponds to a groove Y arranged on the radially inner surface of the chamber, in a median position with respect to said pair of grooves W.

In a further preferred embodiment, each pair of consecutive grooves W arranged on the radially outer surface of the chamber corresponds to at least two grooves Y arranged on the radially inner surface of the chamber, so as to divide the area subtended by the pair of consecutive grooves W into equal parts.

Preferably, said grooves Y have final ends which are spaced apart from the equatorial plane "Q" of the expansible chamber by a distance D.

Preferably, said grooves W have final ends which are spaced apart from the equatorial plane "Q" of the expansible chamber by a distance D¹.

In a preferred embodiment, said distances D and D¹ have the same value.

Further features and advantages will appear more clearly from the detailed description of a preferred but non exclusive embodiment of a tyre vulcanization and moulding apparatus for vehicle wheels according to the present invention.

Such description will be given hereinafter with reference to the annexed drawings, provided by way of indication only, and thus they are non limiting, wherein:
- figure 1 schematically shows a diametrical section view of a vulcanization mould in an initial step of a moulding and vulcanization process according to the present invention;

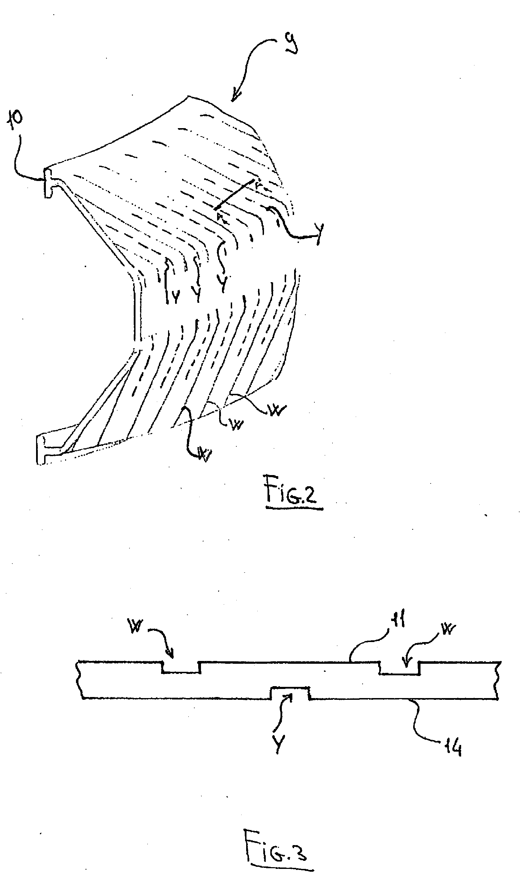

- figure 2 is a perspective partial section view of the expansible chamber according to a possible embodiment of the present invention;
- figure 3 is a section of a portion of the expansible chamber according to line A-A of figure 2.

With reference to the above figures, reference numeral 100 globally indicates a vulcanization mould belonging to a tyre building plant.

The vulcanization and moulding process is carried out by introducing the green tyre 1 into a moulding cavity 2 of the vulcanization mould 100, said cavity 2 having a shape corresponding to the outer shape to be imparted to tyre 1 once moulded and vulcanized.

Once closed into mould 100, the green tyre 1 is pressed against the containment walls that have suitable relieves for causing formation of a predetermined tread pattern.

Subsequently to or concurrently with the pressing step, heat is supplied to the green tyre 1 so as to cause the crosslinking of the elastomeric material the tyre itself is made of.

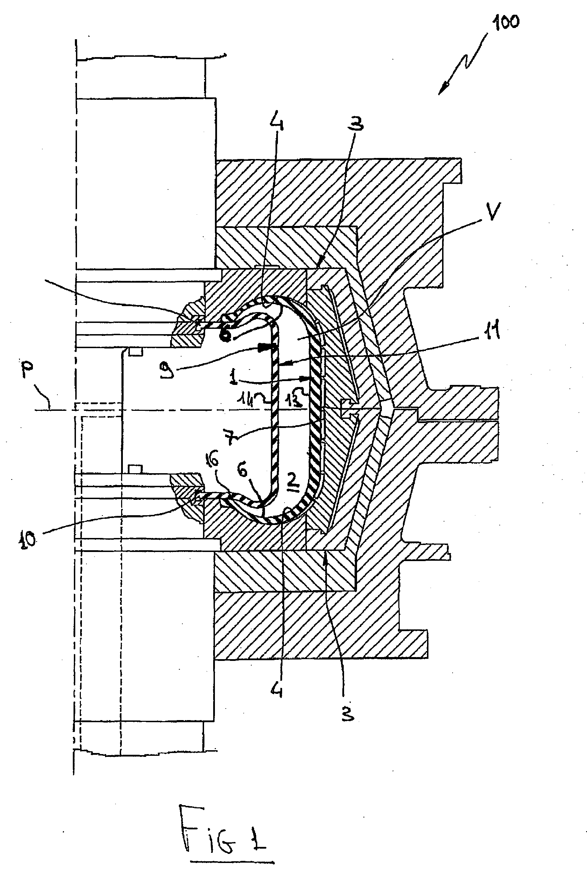

As shown in figure 1, mould 100 has a pair of axially opposite shells 3 which can be reciprocally coupled at an equatorial plane "P". Each shell 3 comprises a working surface 4 configured to operate on beads and sidewalls 6 of the green tyre 1.

Shells 3 reciprocally arranged side by side on said equatorial plane "P" further define a circumferential surface 7 configured to operate against the tread band of the green tyre 1 to be vulcanized.

Once closed into mould 100, the green tyre 1 is pressed against the containment walls by an expansible chamber 9.

The expansible chamber 9, having a substantially toroidal shape, has two radially inner circumferential edges carrying respective anchoring appendices 10, sealingly engageable into mould 100 for operatively associating the expansible chamber 9 to the mould 100 itself. The anchoring appendices 10 are connected to mould 100 at radially innermost anchoring zones of the surfaces of shells 3 which house the beads of the green tyre 1.

An inlet conduit for steam or other operative fluid, formed in the mould 100, runs into the expansible chamber 9 so as to allow the expansion of the latter subsequent to the introduction of steam under pressure, for compressing the green tyre 1 against the containment walls of mould 100.

Such compression preferably occurs so that the radially outer surface 11 of chamber 9 approaches and contacts the radially inner surface 13 of the green tyre 1, according to a predetermined approach sequence.

Preferably, a first plurality of grooves 15 is made on the inner surface 14 of the expansible chamber 9, on at least one portion of said expansible chamber 9.

Preferably, said first plurality of grooves 15 is made according to trajectories which are substantially parallel to one another.

In a preferred embodiment, said first plurality of grooves 15 extends on at least one pair of symmetrical portions with respect to the equatorial plane "Q" of said expansible chamber 9.

Preferably, grooves Y of said at least one first plurality of grooves 15 have a width lₛᵢ comprised between about 0.8 mm and about 1.5 mm.

Preferably, grooves Y of said at least one first plurality of grooves 15 have a depth pₛᵢ comprised between about 0.05 mm and about 0.75 mm.

Preferably, said grooves Y may have final ends 12b which are arranged at a distance D from the equatorial plane "Q" of the expansible chamber 9.

The provision of said first plurality of grooves 15 allows obtaining an elastic modulus Eₓ of said at least one pair of symmetrical portions which is reduced with respect to the elastic modulus E₀ of the remaining portions of said chamber 9.

In a preferred embodiment, said expansible chamber comprises X pairs of symmetrical portions with respect to the equatorial plane Q of said chamber 9, having elastic modulus Eₓ, with 1 ≤ X ≤ n, reduced with respect to said modulus E₀ of the remaining chamber portions, by making X pluralities of grooves substantially parallel to one another, in a radially inner position to said expansible chamber 9, arranged on said X pairs of symmetrical portions.

Preferably, the value of the elastic modulus E₁ of said at least one pair of symmetrical portions is reduced by at least 20% and no more than about 40% with respect to the value of the elastic modulus E₀ of the remaining portions of the expansible chamber.

In a preferred embodiment of the invention, a further plurality of grooves 12 may be made on the radially outer surface 11 of the expansible chamber 9 for discharging the process fluids (typically air) which is into volume V delimited by the radially outer surface 11 of the expansible chamber 9 and by the radially inner surface 13 of tyre 1 during the approach step of said two surfaces: the radially outer surface 11 and the radially inner surface 13.

Preferably, said further plurality of grooves 12 comprises grooves W substantially parallel to each other and extending from an axially outer portion (close to the anchoring appendices 10) of the radially outer surface 11 of the expansible chamber 9 towards an equatorial portion of the expansible chamber 9 itself.

Preferably, grooves W of said further plurality of grooves 12 have a width lₛₑ comprised between about 0.8 mm and about 1.5 mm.

Preferably, grooves W of said further plurality of grooves 12 have a depth pₛₑ comprised between about 0.05 mm and about 0.75 mm.

Preferably, said grooves W may have final ends 12a which are arranged at a distance D¹ from the equatorial plane "Q" of the expansible chamber 9.

In a further preferred embodiment, said grooves 12 extend along the entire radially outer surface 11 of the expansible chamber 9.

In a preferred embodiment, said distances D and D¹ have the same value.

Such plurality of grooves 12 allows the fluids trapped into volume V delimited by the radially outer surface 11 of the expansible chamber and by the radially inner surface 13 of the green tyre 1 to exit through the contact zone 16 between expansible chamber and beads, during the expansion of the chamber itself. Said plurality of grooves 12, in fact, communicates with the environment outside the mould 100 through said contact zone 16.

In a preferred embodiment, each groove W arranged on the radially outer surface 11 of the expansible chamber 9 is arranged at a distance L comprised between about 13 mm and about 22 mm with respect to the consecutive groove,.

According to the modalities herein described, portions of expansible chamber are obtained which are provided with a different elastic behaviour during the expansion step of the chamber 9 itself, obtaining a differentiated deformation of the portions of said chamber, in relation to the specific elastic modulus value.

According to a preferred embodiment, during the expansion of the expansible chamber 9 by the introduction of steam, the radially outer surface 11 of chamber 9 approaches and contacts the radially inner surface 13 of the green tyre 1, according to a predetermined approach sequence.

Preferably, the radially outer surface 11 of said chamber 9 first adheres to the radially inner surface 13 of the green tyre 1 in a rim portion of the radially inner surface 13 itself which is close to the equatorial plane "R" of the green tyre 1.

Thereafter, said radially outer surface 11 adheres to the portions of the radially inner surface 13 having a higher curvature, such portions being arranged at the shoulder zone of tyre 1, i.e. at the borderline between the tread band and the sidewalls 6 of tyre 1.

Finally, said outer surface 11 adheres to the beads and the approach and adhesion sequence is completed.

Preferably, in such a final configuration, at the end of the approach and adhesion sequence of the outer surface of the expansible chamber 9 to the inner surface 13 of tyre 1, said planes P, Q and R are substantially coincident.

## Claims

1. Method for controlling the moulding of a tyre (1), in relation to the approaching sequence of an expansible chamber (9) to the radially inner surface (13) of the tyre (1), by making at least one first plurality (15) of grooves Y on at least one portion of said chamber, in a radially inner position to said chamber (9), said grooves Y having final ends (12a) which are spaced apart from the equatorial plane "Q" of the expansible chamber (9) by a distance D and by making at least one further plurality (12) of grooves W on a radially outer surface (11) of said expansion chamber (9), said grooves W being substantially parallel to one another, so as to decrease the elastic modulus of said at least one portion with respect to the elastic modulus of the remaining portions of said chamber and allow a differentiated deformation of the different portions of said chamber (9), in relation to the specific elastic modulus value, during the expansion of said expansible chamber (9) towards the radially inner surface (13) of the tyre (1) subjected to moulding and vulcanization.

2. Method according to claim 1, wherein said at least one first plurality (15) of grooves is made, in a radially inner position to said chamber, on at least one pair of symmetrical portions with respect to the equatorial plane (Q) of said expansible chamber (9).

3. Method according to claim 1, wherein said at least one first plurality (15) of grooves is made according to trajectories which are substantially parallel to one another.

4. Method according to claim 3, wherein said at least one first (15) and one further (12) plurality of grooves are reciprocally arranged in a substantially parallel way.

5. Method according to claim 2, wherein the elastic modulus value (E₁) of said at least one pair of symmetrical portions is reduced by at least about 20% and no more than about 40%, with respect to the elastic modulus value (E₀) of the remaining portions of the expansible chamber (9).

6. Method according to claim 2, wherein said expansion chamber (9) comprises X pairs of symmetrical portions, with respect to the equatorial plane of said chamber, having elastic modulus (E_{X}), with 1 ≤ X ≤ n, reduced with respect to said modulus (E₀) of the remaining chamber portions, by making X pluralities (12) of grooves substantially parallel to one another, in a radially inner position to said chamber, arranged on said X pairs of symmetrical portions.

7. Expansible chamber for tyre vulcanization and moulding apparatuses, having a toroidal shape, wherein at least one portion of said chamber (9) comprises at least one first plurality (15) of grooves Y in a radially inner position to said chamber (9) said expansible chamber (9) comprising one further plurality (12) of grooves W arranged on a radially outer surface (11) of said expansion chamber (9), said at least one first (15) and one further (12) plurality of grooves being reciprocally arranged in a substantially parallel way and wherein said grooves Y have final ends (12a) which are spaced apart from the equatorial plane "Q" of the expansible chamber (9) by a distance D.

8. Expansible chamber (9) according to claim 7, wherein grooves Y of said at least one first plurality (15) have a width lₛᵢ comprised between about 0.8 mm and about 1.5 mm.

9. Expansible chamber (9) according to claim 7, wherein grooves Y of said at least one first plurality (15) have a depth pₛᵢ comprised between about 0.05 mm and about 0.75 mm.

10. Expansible chamber (9) according to claim 7, wherein grooves W of said further plurality (12) have a width (lₛₑ) comprised between about 0.8 mm and about 1.5 mm.

11. Expansible chamber (9) according to claim 7, wherein grooves W of said further plurality (12) have a depth pₛᵢ comprised between about 0.05 mm and about 0.75 mm.

12. Expansible chamber (9) according to claim 7, wherein each groove W arranged on the radially outer surface (11) of the chamber (9) is located at a distance L which, with respect to the consecutive groove, is greater than or equal to about 13 mm and shorter than or equal to about 22 mm.

13. Expansible chamber (9) according to claim 7, wherein each pair of consecutive grooves W arranged on the radially outer surface (11) of the chamber (9) corresponds to a groove Y arranged on the radially inner surface (14) of the chamber (9), in a median position with respect to said pair of grooves W.

14. Expansible chamber (9) according to claim 7, wherein each pair of consecutive grooves W arranged on the radially outer surface (11) of the chamber (9) corresponds to at least two grooves Y arranged on the radially inner surface (14) of the chamber (9), so as to divide the area subtended by the pair of consecutive grooves W into equal parts.

15. Expansible chamber (9) according to claim 7, wherein said grooves W have final ends (12b) that are spaced apart from the equatorial plane "Q" of the expansible chamber (9) by a distance D¹.

## Patentansprüche

1. Verfahren zur Steuerung der Formung eines Reifens (1), in Relation zu einer Annäherungssequenz einer ausdehnbaren Kammer (9) an die radial innere Oberfläche (13) des Reifens (1), durch Herstellen zumindest einer ersten Vielzahl (15) von Nuten Y an zumindest einem Abschnitt der Kammer, in einer radial inneren Position zu der Kammer (9), wobei die Nuten Y Enden (12a) aufweisen, die von der Äquatorialebene "Q" der ausdehnbaren Kammer (9) um einen Abstand D beabstandet sind, und durch Herstellen zumindest einer weiteren Vielzahl (12) von Nuten W an einer radial äußeren Oberfläche (11) der Ausdehnungskammer (9), wobei die Nuten W im Wesentlichen parallel zueinander sind, um den Elastizitätsmodul des zumindest einen Abschnitts relativ zu dem Elastizitätsmodul der verbleibenden Abschnitte der Kammer zu verringern und eine differenzierte Verformung von verschiedenen Abschnitten der Kammer (9) zu erlauben, in Relation zu dem spezifischen Wert des Elastitzitätsmoduls, während der Ausdehnung der ausdehnbaren Kammer (9) zu der radial inneren Oberfläche (13) des Reifens (1) hin, der der Formung und Vulkanisierung unterworfen wird.

2. Verfahren nach Anspruch 1, wobei die zumindest eine erste Vielzahl (15) von Nuten in einer radial inneren Position zu der Kammer an zumindest einem Paar symmetrischer Abschnitte in Bezug auf die Äquatorialebene (Q) der ausdehnbaren Kammer (9) hergestellt wird.

3. Verfahren nach Anspruch 1, wobei die zumindest eine erste Vielzahl (15) von Nuten in Übereinstimmung mit Verlaufsbahnen hergestellt wird, die im Wesentlichen parallel zueinander sind.

4. Verfahren nach Anspruch 3, wobei die zumindest eine erste (15) und eine weitere (12) Vielzahl von Nuten auf im Wesentlichen gegenseitig parallele Art angeordnet sind.

5. Verfahren nach Anspruch 2, wobei der Wert (E₁) des Elastizitätsmoduls des zumindest einen Paars symmetrischer Abschnitte um zumindest etwa 20% und nicht mehr als etwa 40% in Bezug auf den Wert (E₀) des Elastizitätsmoduls der verbleibenden Abschnitte der ausdehnbaren Kammer (9) verringert ist.

6. Verfahren nach Anspruch 2, wobei die Ausdehnungskammer (9) X Paare symmetrischer Abschnitte in Bezug auf die Äquatorialebene der Kammer umfasst, die Elastizitätsmodule (E_{X}) mit 1 ≤ X ≤ n umfassen, die in Bezug auf den Elastizitätsmodul (E₀) der verbleibenden Kammerabschnitte verringert sind, durch Herstellen von X Vielzahlen (12) von Nuten, die im Wesentlichen parallel zueinander sind, in einer radial inneren Position zu der Kammer und an den X Paaren symmetrischer Abschnitte angeordnet.

7. Ausdehnbare Kammer für Reifenvulkanisier- und Formungsvorrichtungen, mit einer ringförmigen Gestalt, wobei zumindest ein Abschnitt der Kammer (9) zumindest eine erste Vielzahl (15) von Nuten Y in einer radial inneren Position zu der Kammer (9) aufweist, wobei die ausdehnbare Kammer (9) eine weitere Vielzahl (12) von Nuten W umfasst, die an einer radial äußeren Oberfläche (11) der Ausdehnungskammer (9) angeordnet ist, wobei die zumindest eine erste (15) und eine weitere (12) Vielzahl von Nuten auf im Wesentlichen gegenseitig parallele Art angeordnet sind und wobei die Nuten Y Enden (12a) aufweisen, die von der Äquatorialebene "Q" der ausdehnbaren Kammer (9) um einen Abstand D beabstandet sind.

8. Ausdehnbare Kammer (9) nach Anspruch 7, wobei die Nuten Y der zumindest einen ersten Vielzahl (15) eine Breite lₛᵢ aufweisen, die zwischen etwa 0,8 mm und etwa 1,5 mm umfasst.

9. Ausdehnbare Kammer (9) nach Anspruch 7, wobei die Nuten Y der zumindest einen ersten Vielzahl (15) eine Breite pₛᵢ aufweisen, die zwischen etwa 0,05 mm und etwa 0,75 mm umfasst.

10. Ausdehnbare Kammer (9) nach Anspruch 7, wobei die Nuten W der weiteren Vielzahl (12) eine Breite (lₛₑ) aufweisen, die zwischen etwa 0,8 mm und etwa 1,5 mm umfasst.

11. Ausdehnbare Kammer (9) nach Anspruch 7, wobei die Nuten W der weiteren Vielzahl (12) eine Breite pₛᵢ aufweisen, die zwischen etwa 0,05 mm und etwa 0,75 mm umfasst.

12. Ausdehnbare Kammer (9) nach Anspruch 7, wobei jede Nut W, die an der radial äußeren Oberfläche (11) der Kammer (9) angeordnet ist, in einem Abstand in Bezug auf die folgende Nut angeordnet ist, der größer oder gleich etwa 13 mm und kürzer oder gleich etwa 22 mm ist.

13. Ausdehnbare Kammer (9) nach Anspruch 7, wobei jedes Paar aufeinanderfolgender Nuten W, die an der radial äußeren Oberfläche (11) der Kammer (9) angeordnet sind, einer Nut Y entspricht, die an der radial inneren Oberfläche (14) der Kammer (9) in einer mittigen Position in Bezug auf das Paar Nuten W angeordnet ist.

14. Ausdehnbare Kammer (9) nach Anspruch 7, wobei jedes Paar aufeinanderfolgender Nuten W, die an der radial äußeren Oberfläche (11) der Kammer (9) angeordnet sind, zumindest zwei Nuten Y entspricht, die an der radial inneren Oberfläche (14) der Kammer (9) angeordnet sind, um den Bereich, der dem Paar aufeinanderfolgender Nuten gegenüberliegt, in gleiche Teile zu teilen.

15. Ausdehnbare Kammer (9) nach Anspruch 7, wobei die Nuten W Enden (12b) aufweisen, die von der Äquatorialebene "Q" der ausdehnbaren Kammer (9) um einen Abstand D¹ beabstandet sind.

## Revendications

1. Procédé pour commander le moulage d'un pneu (1), par rapport à la séquence d'approche d'une chambre expansible (9) de la surface radialement intérieure (13) du pneu (1), en réalisant au moins une première pluralité (15) de rainures Y sur au moins une partie de ladite chambre, dans une position radialement intérieure à ladite chambre (9), lesdites rainures Y ayant des extrémités finales (12a) qui sont espacées du plan équatorial « Q » de la chambre expansible (9) d'une distance D et en réalisant au moins une autre pluralité (12) de rainures W sur une surface radialement extérieure (11) de ladite chambre d'expansion (9), lesdites rainures W étant sensiblement parallèles les unes aux autres, de manière à diminuer le module d'élasticité de ladite au moins une partie par rapport au module d'élasticité des parties restantes de ladite chambre et à permettre une déformation différenciée des différentes parties de ladite chambre (9), par rapport à la valeur spécifique du module d'élasticité, au cours de l'expansion de ladite chambre expansible (9) vers la surface radialement intérieure (13) du pneu (1) soumis au moulage et à la vulcanisation.

2. Procédé selon la revendication 1, dans lequel ladite au moins une première pluralité (15) de rainures est réalisée, dans une position radialement intérieure à ladite chambre, sur au moins une paire de parties symétriques par rapport au plan équatorial (Q) de ladite chambre expansible (9).

3. Procédé selon la revendication 1, dans lequel ladite au moins une première pluralité (15) de rainures est réalisée selon des trajectoires qui sont sensiblement parallèles les unes aux autres.

4. Procédé selon la revendication 3, dans lequel lesdites au moins première (15) et autre (12) pluralités de rainures sont mutuellement agencées de manière sensiblement parallèle.

5. Procédé selon la revendication 2, dans lequel la valeur du module d'élasticité (E₁) de ladite au moins une paire de parties symétriques est réduite d'au moins environ 20% et de pas plus d'environ 40%, par rapport à la valeur du module d'élasticité (E₀) des parties restantes de la chambre expansible (9).

6. Procédé selon la revendication 2, dans lequel ladite chambre d'expansion (9) comprend X paires de parties symétriques, par rapport au plan équatorial de ladite chambre, ayant un module d'élasticité (E_{X}), avec 1 ≤ X ≤ n, réduit par rapport audit module (E₀) des parties de chambre restantes, en réalisant X pluralités (12) de rainures sensiblement parallèles les unes aux autres, dans une position radialement intérieure à ladite chambre, agencées sur lesdites X paires de parties symétriques.

7. Chambre expansible pour appareils de vulcanisation et de moulage de pneus, ayant une forme toroïdale, dans laquelle au moins une partie de ladite chambre (9) comprend au moins une première pluralité (15) de rainures Y dans une position radialement intérieure à ladite chambre (9), ladite chambre expansible (9) comprenant une autre pluralité (12) de rainures W agencées sur une surface radialement extérieure (11) de ladite chambre d'expansion (9), lesdites au moins première (15) et autre (12) pluralités de rainures étant mutuellement agencées de manière sensiblement parallèle, et où lesdites rainures Y présentent des extrémités finales (12a) qui sont espacées du plan équatorial « Q » de la chambre expansible (9) d'une distance D.

8. Chambre expansible (9) selon la revendication 7, dans laquelle des rainures Y de ladite au moins une première pluralité (15) ont une largeur lₛᵢ comprise entre environ 0,8 mm et environ 1,5 mm.

9. Chambre expansible (9) selon la revendication 7, dans laquelle des rainures Y de ladite au moins une première pluralité (15) ont une profondeur pₛᵢ comprise entre environ 0,05 mm et environ 0,75 mm.

10. Chambre expansible (9) selon la revendication 7, dans laquelle des rainures W de ladite autre pluralité (12) ont une largeur (lₛₑ) comprise entre environ 0,8 mm et environ 1,5 mm.

11. Chambre expansible (9) selon la revendication 7, dans laquelle des rainures W de ladite autre pluralité (12) ont une profondeur pₛᵢ comprise entre environ 0,05 mm et environ 0,75 mm.

12. Chambre expansible (9) selon la revendication 7, dans laquelle chaque rainure W agencée sur la surface radialement extérieure (11) de la chambre (9) est située à une distance L qui, par rapport à la rainure consécutive, est supérieure ou égale à environ 13 mm et inférieure ou égale à environ 22 mm.

13. Chambre expansible (9) selon la revendication 7, dans laquelle chaque paire de rainures consécutives W agencée sur la surface radialement extérieure (11) de la chambre (9) correspond à une rainure Y agencée sur la surface radialement intérieure (14) de la chambre (9), dans une position médiane par rapport à ladite paire de rainures W.

14. Chambre expansible (9) selon la revendication 7, dans laquelle chaque paire de rainures consécutives W agencée sur la surface radialement extérieure (11) de la chambre (9) correspond à au moins deux rainures Y agencées sur la surface radialement intérieure (14) de la chambre (9), de manière à diviser la zone sous-tendue par la paire de rainures consécutives W en parties égales.

15. Chambre expansible (9) selon la revendication 7, dans laquelle lesdites rainures W ont des extrémités finales (12b) qui sont espacées du plan équatorial « Q » de la chambre expansible (9) d'une distance D¹.
